# EUROPEAN PATENT SPECIFICATION

(11) **EP 3 725 188 B1**
(45) Date of publication and mention of the grant of the patent: **24.07.2024**
(21) Application number: 20165460.5
(22) Date of filing: 25.03.2020
(51) Int. Cl.: A47F 3/00, E06B 3/66

(54) **MUSEUM SHOWCASE HAVING A TRANSPARENT WALL PROVIDED WITH AN OPAQUE SHIELDING**
MUSEUMSVITRINE MIT EINER TRANSPARENTEN WAND VERSEHEN MIT EINER UNDURCHSICHTIGEN ABSCHIRMUNG
VITRINE DE MUSEE COMPORTANT UNE PAROI TRANSPARENTE INCLUANT UND PROTECTION OPAQUE

(30) Priority: 17.04.2019 US 201916386847
(43) Date of publication of application: 21.10.2020
(73) Proprietor: Goppion S.p.A., 20090 Trezzano sul Naviglio (MI) (IT)
(72) Inventor: GOPPION, Alessandro, 20144 Milano (IT)
(74) Representative: Checcacci, Giorgio

(56) References cited:
- JP-A- 2012 080 989
- US-A- 5 125 726

## Description

The present invention relates to a museum showcase, i.e. a showcase designed and built for the conservation and display in a protected environment of cultural items, such as works of art, historical exhibits and the like, within the context of a display environment such as a museum, an exhibition or the like. The term showcase alone will be used sometimes below for the sake of brevity, although it still means a museum showcase.

The present invention relates in particular to a museum showcase in which at least one transparent wall is provided with an opaque shielding.

The tendency to increasingly use transparent walls is well known in the sector of museum showcases, so as to guarantee not only greater visibility of the works housed in the showcase, but also minimal visual impact of the showcase itself with respect to the works contained therein.

However, transparency is not always appropriate. For example, it may be appropriate not to show a technical space of the showcase, either because it disturbs the view or because this could provide inappropriate information on security or control systems. In these cases, it is obviously possible to resort to the use of an opaque wall to close the showcase specifically where transparency is not desired.

However, in many cases, it is preferable for a same wall to have transparent portions and opaque portions. This is typically the case in which a single wall closes an entire side of the showcase, wherein a main portion of the wall must be transparent to allow the visibility of the items displayed in the display space of the showcase, while a lower portion and possibly an upper portion - which are at technical spaces of the showcase - must be opaque.

In these cases, opaque shielding is employed, applied to the transparent wall on the inner face of the wall, i.e. the one facing the inside of the showcase.

The opaque shielding is often obtained by applying a paint to the wall. In this way, it is easy to give the opaque shielding the desired shape and size, as well as the colour.

However, the applicant realized that the paints used for obtaining the opaque shielding in the aforesaid way can easily emit volatile substances that then spread into the display space of the showcase. These volatile substances can be dangerous as they are aggressive against the items displayed in the showcase, especially when they are ancient and delicate items that require utmost attention for the correct conservation thereof. Therefore, if the showcase is intended to house items of this kind, it is not possible to obtain opaque shielding on transparent walls through the application of paint, unless the paint is applied on the outer face; however, an application on the outer face of the transparent wall visually alters the external aesthetic impact of the showcase and is not therefore desirable. Alternatively, it is possible to resort to different opaque shieldings from paint but which are more complex, less aesthetically desirable and however that do not exclude the possibility of emitting harmful volatile substances.

The problem therefore exists of realizing transparent walls with opaque shieldings that do not subject the displayed items to risks due to the emission of harmful volatile substances inside the display space of the showcase and that do not alter the external appearance of the showcase. JP 2012 080989 A and US 5125726 A disclose showcases according to the preamble of claim 1; none of them addresses the above problem.

Therefore, the present invention relates to a museum showcase according to claim 1. Preferred features are set forth in the dependent claims.

More in particular, the invention relates to a museum showcase comprising a case which contains a display space separate from the external environment, wherein the case comprises at least one transparent wall provided with an opaque shielding, characterized in that the transparent wall is layered and comprises at least two glass slabs coupled to each other along respective proximal faces, wherein the opaque shielding is applied to one of the two glass slabs, on the proximal face thereof.

With this structure the opaque shielding is completely contained between the two glass slabs. Therefore, it does not jeopardize the external aesthetic appearance of the showcase, as the surface continuity of the outer face of the transparent wall remains intact; furthermore and above all, the opaque shielding is not in conditions such as to cause a risk of the emission of harmful substances inside the display space of the showcase, whatever substance it is made of.

Preferably, the opaque shielding is obtained through the direct application to the glass slab of a layer of opaque paint. As already mentioned, this shielding can be easily realized in the precise shape and dimensions required by each specific case; furthermore, its thickness can be reduced, such as not to create any disturbance in the coupling of the two glass slabs to each other.

Preferably, the glass slabs comprise an inner slab and an outer slab, and the opaque shielding is applied to the outer slab or alternatively to the inner slab. The choice between the two possibilities can be made based on which side of the shielding is to remain visible from the outside, e.g. due to the colour or any patterns.

The glass slabs are coupled by means of a film of a transparent adhesive polymer, preferably EVA or PVB. These materials, which are known in themselves, guarantee not only excellent adhesion, although in the presence of opaque shielding, but also perfect transparency.

Preferably, the glass slabs comprise an inner slab and an outer slab, wherein the outer slab has a larger extension than the inner slab. In this way, it is possible to exploit the layered structure of the walls to realize housing seats for sealing gaskets simply and effectively, so as to ensure housing seats for sealing gaskets simply and effectively, so as to ensure perfect insulation between the display space in the showcase and the external environment.

Further characteristics and advantages of the invention will be more evident from the following description of a preferred embodiment thereof, made with reference to the appended drawings. In such drawings:

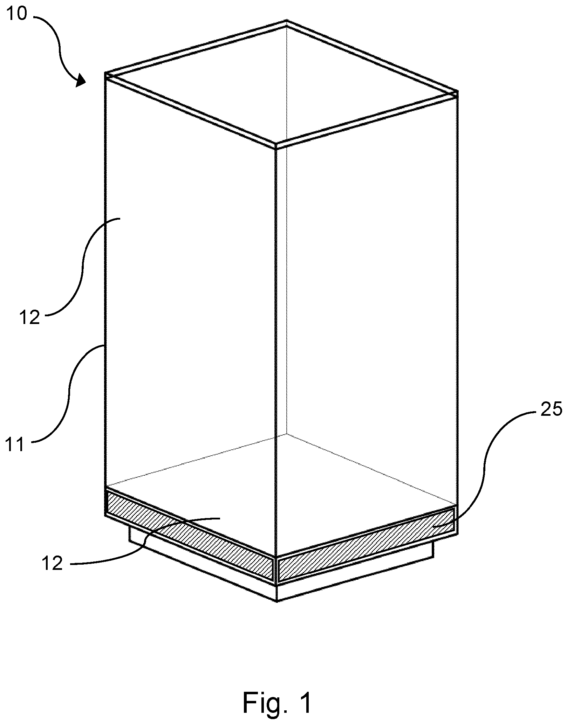

- figure 1 is a schematic view of a museum showcase according to the invention;

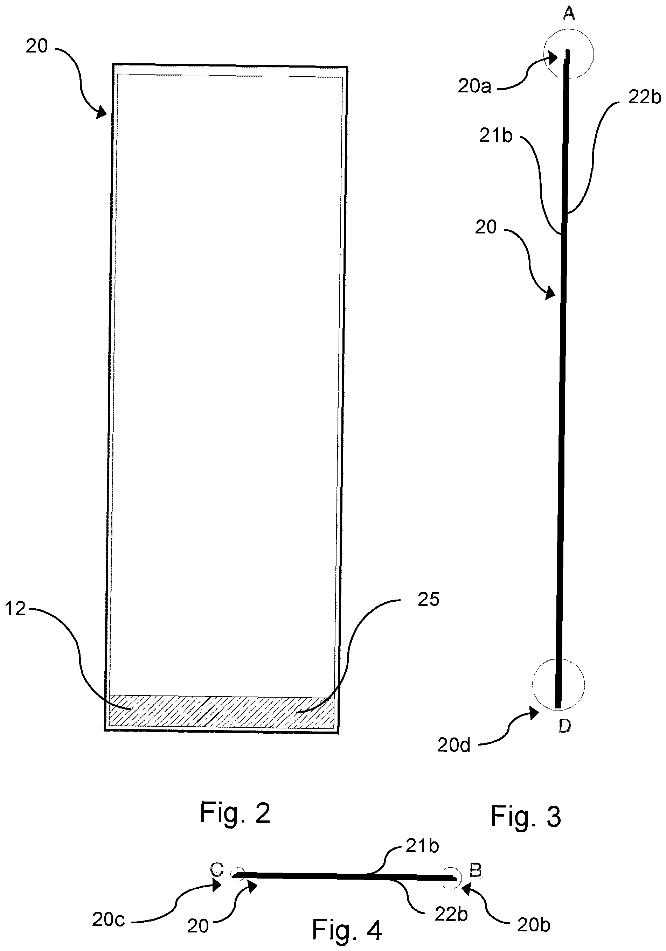

- figure 2 is a front view of a transparent wall of the showcase of figure 1;
- figure 3 is a side profile view of the transparent wall of figure 2;
- figure 4 is a plan profile view of the transparent wall of figure 2;
- figures 5, 6, 7, 8 are enlargements of details A, B, C, D of figures 3 and 4;

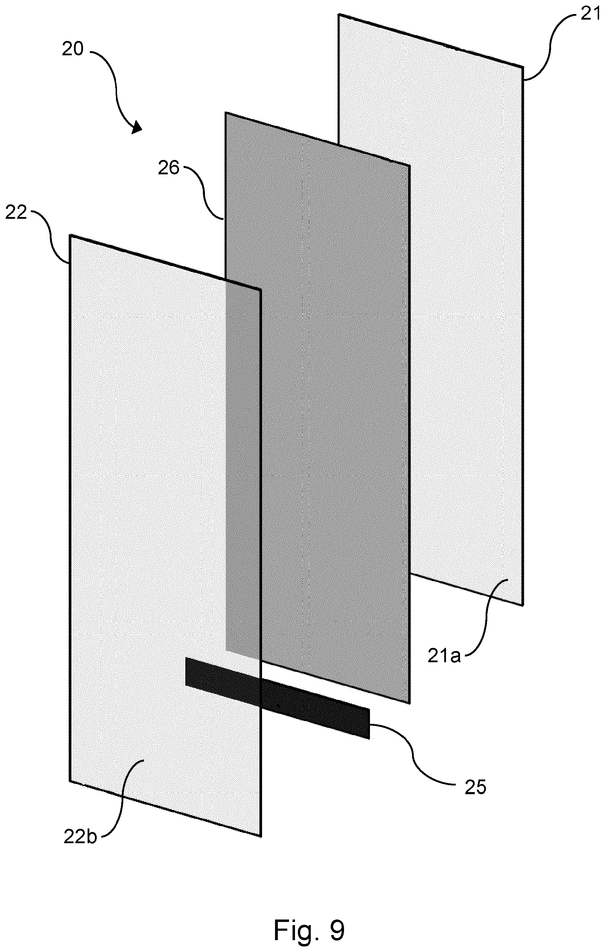

- figure 9 is an exploded schematic view of the transparent front wall of the showcase of figure 1.

In the figures, 10 indicates a museum showcase that comprises a case 11 which contains both a display space 12, intended to house items to be displayed and conserved, and a technical space 13, in which technical components of the showcase 10 are housed, not intended to be seen by the public such as, for example, climate control, air purification, moisture control, security and alarm systems, etc. In the example shown in the figures, the display space 12 comprises most of the space available in the case 11, whereas the technical space 13 is obtained in a lower portion of the case 11; in other embodiments the technical space could also be obtained elsewhere, e.g. in an upper portion of the case 11, in an intermediate portion of the case 11, and in more than one of these positions. In any case, as mentioned, it is a space that must not be visible by the public outside the showcase 10, but only by authorized personnel.

The display space 12 is separated, and preferably sealed, with respect to the external environment and with respect to the technical space 13.

The case 11 comprises a plurality of walls and in particular at least one transparent wall 20, which has a layered structure and therefore comprises two glass slabs, an internal slab 21 and an external slab 22 coupled to each other along respective proximal faces 21a and 22a; two distal faces 21b and 22b of the slabs 21 and 22 therefore respectively form an inner face and an outer face of the transparent wall 20.

The transparent wall 20 extends along the whole height of the case 11 and therefore embraces both the display space 12, and the technical space 13. So as not to make the transparent wall 20 visible from outside the technical space 13, an opaque shielding 25 is provided, applied to the transparent wall 20 at the technical space 13. The opaque shielding 25 is applied to the proximal face of one of the two slabs; in the example illustrated, in particular, the opaque shielding 25 is applied to the proximal face 22a of the outer slab 22; in another embodiment, the opaque shielding could be applied to the proximal face 21a of the inner slab 21.

The opaque shielding 25 is obtained by means of an opaque paint, applied (with any suitable means, according to the type of paint chosen) to the outer slab 22, obviously before it is coupled to the inner slab 21. Once the opaque shielding 25 has been applied, the two slabs 21 and 22 are coupled by means of a suitable film 26 of transparent adhesive polymer such as, for example EVA, PVB or the like. In other embodiments, the opaque shielding 25 could be obtained through the application of a sheet of suitable opaque material.

Once the two glass sheets 21 and 22 are coupled to each other by means of the film 26 of transparent adhesive polymer, the shielding 25 remains fully confined inside the transparent wall 20; therefore whatever material it is made of, emissions of volatile substances, either towards the outside of the showcase 10, or especially towards the inside of the display space 12, are excluded, to the advantage of the conservation of the items placed in the showcase 10, inasmuch as they may be delicate and vulnerable to volatile substances. Furthermore, the shielding 25 is not directly visible on the outer face of the transparent wall 20, i.e. on the distal face 22b and therefore does not disturb the aesthetic "all glass" impact of the showcase 10. Further glass slabs (as well as the slabs 21 and 22) may be provided, e.g. to confer greater resistance to the transparent wall 20.

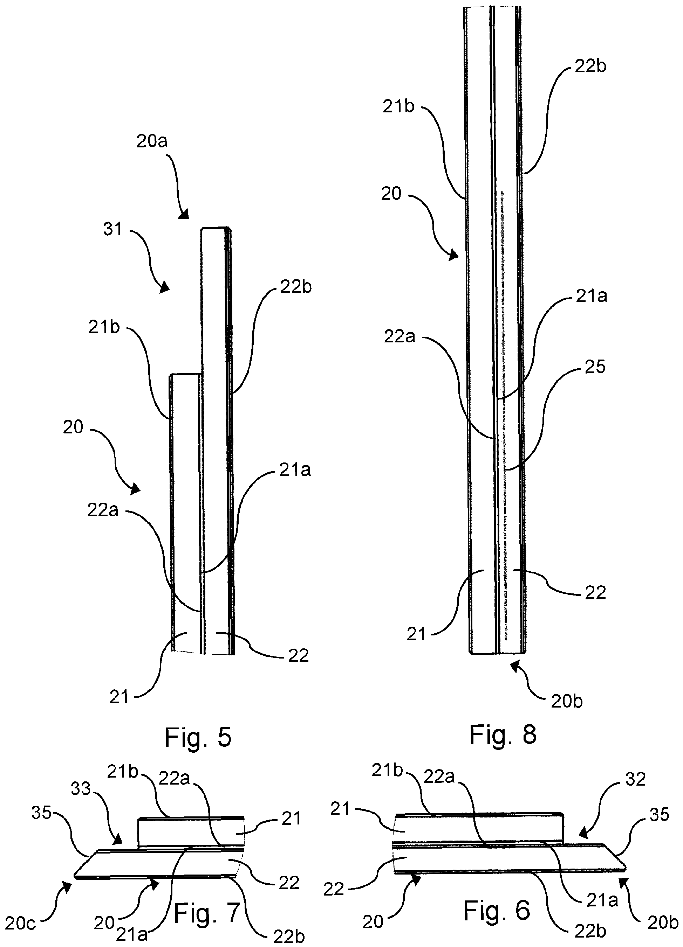

Furthermore, as is clearly visible especially in figures 5, 6, 7 and 8, the two glass slabs 21 and 22 are not the same: the outer slab 22 has a larger extension and is provided with 45° bevels at some ends. More precisely, at the upper edge 20a of the transparent wall 20, the outer slab 22 exceeds the inner slab 21, determining a lowered zone 31 of the transparent wall 20; at the lower edge 20d of the transparent wall 20, the outer slab 22 and the inner slab 21 have the same extension and are therefore completely superposed; at the side edges 20b and 20c of the transparent wall 20, the outer slab 22 exceeds the inner slab 21, determining lowered zones 32 and 33 of the transparent wall 20, and is provided with bevels 34 and 35; the lowered zones 32 and 33 have a much smaller extension than the lowered zone 31. The lowered zones 31, 32, 33 and the bevels 34 and 35 form abutment zones of the transparent wall 20 on the rest of the case 11; in particular, in the lowered zones 31, 32, 33 sealing gaskets (not illustrated in the drawings) can be easily housed, whereas the bevels 34 and 35 allow a very precise (and virtually invisible) coupling to be obtained (even if the wall 20 is transparent) between the transparent wall 20 and the walls adjacent thereto.

## Claims

1. Museum showcase comprising a case (11) which contains a display space (12) separate from the external environment, wherein the case (11) comprises at least one transparent wall (20) provided with an opaque shielding (25), wherein the transparent wall (20) is layered and comprises at least two glass slabs (21, 22) coupled to each other by a film (26) of a transparent adhesive polymer along respective proximal faces (21a, 22a), wherein the opaque shielding (25) is applied to one of the two glass slabs (21, 22), on the proximal face (21a, 22a) thereof, **characterized in that** the opaque shielding (25) is an opaque paint, susceptible of emitting volatile substances, wherein the opaque paint is fully confined within the transparent wall (20), between the two glass slabs (21, 22), so as to block within the transparent wall (20) any emission of the volatile substances from the shielding (25).

2. Museum showcase according to claim 1, wherein the opaque shielding (25) is obtained through the direct application to the glass slab (21, 22) of the layer of opaque paint.

3. Museum showcase according to claim 1 or 2, wherein the glass slabs comprise an inner slab (21) and an outer slab (22), and the opaque shielding is applied to the outer slab (22).

4. Museum showcase according to claim 1 or 2, wherein the glass slabs comprise an inner slab (21) and an outer slab (22), and the opaque shielding is applied to the inner slab (21).

5. Museum showcase according to any of preceding claims, wherein the transparent adhesive polymer is EVA or PVB.

6. Museum showcase according to claim 1, wherein the glass slabs comprise an inner slab (21) and an outer slab (22), wherein the outer slab (22) has a larger extension than the inner slab (21).

## Patentansprüche

1. Museumsvitrine, umfassend ein Gehäuse (11), das einen von der äußeren Umgebung getrennten Ausstellungsraum (12) enthält, wobei das Gehäuse (11) mindestens eine transparente Wand (20) umfasst, die mit einer undurchsichtigen Abschirmung (25) versehen ist, wobei die transparente Wand (20) geschichtet ist und mindestens zwei Glasplatten (21, 22) umfasst, die durch einen Film (26) aus einem transparenten Klebepolymer entlang entsprechender proximaler Flächen (21a, 22a) miteinander verbunden sind, wobei die undurchsichtige Abschirmung (25) auf eine der beiden Glasplatten (21, 22) auf deren proximaler Fläche (21a, 22a) aufgebracht ist, **dadurch gekennzeichnet, dass** die undurchsichtige Abschirmung (25) eine undurchsichtige Farbe ist, die flüchtige Substanzen emittieren kann, wobei die undurchsichtige Farbe vollständig innerhalb der transparenten Wand (20) zwischen den beiden Glasplatten (21, 22) eingeschlossen ist, so dass innerhalb der transparenten Wand (20) jegliche Emission der flüchtigen Substanzen aus der Abschirmung (25) blockiert wird.

2. Museumsvitrine nach Anspruch 1, wobei die undurchsichtige Abschirmung (25) durch direktes Aufbringen der Schicht aus undurchsichtiger Farbe auf die Glasplatte (21, 22) erhalten wird.

3. Museumsvitrine nach Anspruch 1 oder 2, wobei die Glasplatten eine innere Platte (21) und eine äußere Platte (22) umfassen und die undurchsichtige Abschirmung auf der äußeren Platte (22) aufgebracht ist.

4. Museumsvitrine nach Anspruch 1 oder 2, wobei die Glasplatten eine innere Platte (21) und eine äußere Platte (22) umfassen und die undurchsichtige Abschirmung auf der inneren Platte (21) aufgebracht ist.

5. Museumsvitrine nach einem der vorstehenden Ansprüche, wobei das transparente Klebstoffpolymer EVA oder PVB ist.

6. Museumsvitrine nach Anspruch 1, wobei die Glasplatten eine innere Platte (21) und eine äußere Platte (22) umfassen, wobei die äußere Platte (22) eine größere Ausdehnung als die innere Platte (21) aufweist.

## Revendications

1. Vitrine de musée comprenant un boîtier (11) qui contient un espace d'exposition (12) séparé de l'environnement externe, dans laquelle le boîtier (11) comprend au moins une paroi transparente (20) pourvue d'un blindage opaque (25), dans laquelle la paroi transparente (20) est stratifiée et comprend au moins deux plaques de verre (21, 22) couplées l'une à l'autre par un film (26) d'un polymère adhésif transparent le long de faces proximales respectives (21a, 22a), dans laquelle le blindage opaque (25) est appliqué sur une des deux plaques de verre (21, 22), sur la face proximale (21a, 22a), **caractérisée en ce que** le blindage opaque (25) est une peinture opaque, susceptible d'émettre des substances volatiles, dans laquelle la peinture opaque est entièrement confinée au sein de la paroi transparente (20), entre les deux plaques de verre (21, 22), de manière à bloquer au sein de la paroi transparente (20) toute émission de substances volatiles à partir du blindage (25).

2. Vitrine de musée selon la revendication 1, dans laquelle le blindage opaque (25) est obtenu par l'application directe à la plaque de verre (21, 22) de la couche de peinture opaque.

3. Vitrine de musée selon la revendication 1 ou 2, dans laquelle les plaques de verre comprennent une plaque intérieure (21) et une plaque extérieure (22), et le blindage opaque est appliqué à la plaque extérieure (22).

4. Vitrine de musée selon la revendication 1 ou 2, dans laquelle les plaques de verre comprennent une plaque intérieure (21) et une plaque extérieure (22), et le blindage opaque est appliqué à la plaque intérieure (21).

5. Vitrine de musée selon l'une quelconque des revendications précédentes, dans laquelle le polymère adhésif transparent est de l'EVA ou du PVB.

6. Vitrine de musée selon la revendication 1, dans laquelle les plaques de verre comprennent une plaque intérieure (21) et une plaque extérieure (22), dans laquelle la plaque extérieure (22) présente une plus grande extension que la plaque intérieure (21).
